# EUROPÄISCHE PATENTSCHRIFT

(11) **EP 3 695 134 B1**
(45) Veröffentlichungstag und Bekanntmachung des Hinweises auf die Patenterteilung: **28.02.2024**
(21) Anmeldenummer: 18783411.4
(22) Anmeldetag: 02.10.2018
(51) Int. Cl.: F16D 65/18, F16J 1/00, B21K 1/18, F16D 125/06

(54) **KALTUMGEFORMTER STAHLBREMSKOLBEN FÜR EINE KRAFTFAHRZEUGTEILBELAGSCHEIBENBREMSE**
COLD FORMED STEEL BRAKE PISTON FOR A DISC BRAKE OF A MOTOR VEHICLE
PISTON DE FREIN EN ACIER FORMÉ À FROID POUR UN FREIN À DISQUE D'UN VÉHICULE AUTOMOBILE

(30) Priorität: 10.10.2017 DE 102017218027
(43) Veröffentlichungstag der Anmeldung: 19.08.2020
(73) Patentinhaber: Continental Automotive Technologies GmbH, 30165 Hannover (DE); Erdrich Umformtechnik GmbH, 77871 Renchen-Ulm (DE)
(72) Erfinder: WINKLER, Thomas, 55131 Mainz (DE); FÜLLER, Dieter, 64569 Nauheim (DE); ZEIBIG, Uwe, 77855 Achern (DE); MÜLLER, Matthias, 77704 Oberkirch (DE)
(74) Vertreter: Epping - Hermann - Fischer
(86) Internationale Anmeldenummer: PCT/EP2018/076715
(87) Internationale Veröffentlichungsnummer: WO 2019/072623

(56) Entgegenhaltungen:
- WO-A1-2016/105000
- WO-A1-2016/165897
- DE-A1-102008 042 778
- DE-A1-102013 223 962

## Beschreibung

Die Erfindung betrifft einen kaltumgeformter Stahlbremskolben für eine Kraftfahrzeugteilbelagscheibenbremse, mit dünnwandigem Aufbau als einseitig offener Topf umfassend Boden und Wand, mit einer radial außen eingeprägten Nut in der Wand, sowie mit einer radial innen angeprägten Wandkonsole an der Wand.

Ein besonders stabiler sowie tiefgezogener Kolben mit kuppelförmigem Boden ist beispielhaft aus der EP 304 103 A1 bekannt. Ein Nachteil von besonders gewichtsoptimiert also dünnwandig gestalteten Kolben besteht darin, dass deren Wandung über eine minimierte Wandstärke verfügt, so dass diese unter Beanspruchung wölbt, also Beulen werfen kann. Mögliche Folgeschäden sind Undichtigkeit, erhöhter Verschleiß bis hin zu Folgeschäden wie beispielsweise Festfressen beziehungsweise Festklemmen der Wandung in einer Kolbenbohrung. Aus der US 4, 193, 179 B1 ist daher ein besonders leicht, stabil, preiswert sowie rotationssymmetrisch, spanlos gefertigter, Stahlbremskolben einer Wandstärke A bekannt geworden. Am offenen Ende der Wandung ist orthogonal zur Kolbenlängsachse eine ringförmige Nut von radial außen einrolliert.

DE 10 2013 223 962 A1 betrifft einen Kolben, der als einseitig offener Hohlzylinder spanlos aus dünnem Stahlblech oder einem Stahldrahtabschnitt umgeformt gestaltet ist, und einen Kolbenboden sowie einstückig daran eine Wandung mit einer Nut umfasst.

DE 10 2008 042 778 A1 betrifft eine ansteuerbare elektromechanische Einrichtung zur Feststellung eines Kolbens in einem Zylinder.

WO 2016/105000 A1 betrifft ein Schmiedeverfahren für einen Kolben eines Bremssattelgehäuses.

WO 2016/165897 A1 betrifft einen Kolben für einen Bremssattel der als einseitig offener Topf mit einer Wandung und mit einem Kolbenboden einstückig vorliegt.

Die Erfindung beruht auf der Aufgabe, eine weiter vervollkommnete, stabile Stahlbremskolbenkonstruktion mit verbesserter Schnittstelle vorzulegen, die sowohl für großkalibrige wie auch für kleinkalibrige Stahlbremskolben gleichermaßen flexibel sowie kostengünstig-fertigungsgerecht skaliert darstellbar ist.

Die Aufgabe wird erfindungsgemäß gelöst, indem die Wand mit Versatz neben der Wandkonsole, also am offenen Topfende, mit mindestens einem Zug und mit mindestens einem Feld derart profiliert ausgebildet ist, dass die Wand über unterschiedlich dick ausgeprägte Wandflächenbezirke verfügt, die in Umfangsrichtung mit Abstand zueinander versetzt vorliegen, wobei erfindungsgemäß Züge und/oder Felder mit unregelmäßigem Versatz zueinander an einer Innenwand der Wand des Stahlbremskolbens beabstandet vorgesehen sind. Also liegt eine besondere Wandinnenprofilierung vor, so dass die Kolbenwandung bei weitestgehend glatt-zylindrischer Außenwand über unterschiedlich dick ausgeprägte Wandflächenbezirke verfügt. Zug und Feld sind vorteilhafterweise jeweils parallel zur Kolbenachse sowie zueinander parallel gerichtet am Umfang abwechseln mit jeweils unterschiedlichen Durchmessern (Kopfkreis, Fußkreis) vorgesehen. Dabei teilen beispielsweise zwei parallel Züge zwei parallel Felder voneinander, und wobei Züge und Felder am Innenumfang intermittierend, sowie parallel zur Kolbenachse gerichtet abwechseln vorgesehen sein können. Die Bremskolbenwandung weicht also auf Grund Ihrer Innenprofilierung sowie Wandstärkenvariation von ideal-gleichdicken Kolbenwandungen ab. Die Erfindung ist mit dem Vorteil verknüpft, dass die Führung einer Kolbenaußenwandung unbeeinflusst ist, und wobei Züge und Felder anhand kanalartiger Wirkung eine Taktzeit bei einer Bremsentlüftung reduzieren, weil beispielsweise das Entweichen von Luftbläschen kanalartig befördert ist. Grundsätzlich ist es möglich, Züge und Felder jeweils zueinander gegenüberliegend zu arrangieren. Dadurch wird schiefe Biegung in der Kolbenwandung vorteilhaft verhindert.

Die Profilflanke zwischen Zügen und Feldern kann grundsätzlich beliebig ausgeprägt sein und beispielhaft Stufenabsatzform aufweisen. Weitere Flankenformen zur Ausbildung der Übergänge zwischen Zügen und Felder sind denkbar. Besonders vorteilbehafte Ergebnisse sind beispielhaft mit wellenförmig oder verzahnungsartig profiliert eingeprägten Zügen und Feldern erzielbar, und wobei die Knickresistenz der Kolbenwandung mit einer gesteigerten Radialüberdeckung überproportional ansteigt. Großzügige Ausrundung bzw. Abrundung in einem Übergangsbereich zwischen Zug und Feld, also insbesondere im Übergangsbereich zwischen Kopfkreis und Fußkreis reduzieren einen Kerbwirkungseinfluss.

Grundsätzlich kann die Profilform der Züge und Felder im Querschnitt symmetrisch ausgebildet sein, was eine Werkzeugfertigung sowie Qualitätsprüfung erleichtern kann. Mit Hilfe von einer asymmetrisch verteilt oder sonstwie codiert ausgeprägten Profilierung kann sowohl eine lagerichtige Montagezuordnung für periphere Bauteile ermöglicht werden, als auch beliebige Zusatzfunktion implementiert werden. Beispielsweise kann die Profilierung zwischen Kolbeninnenwandung und peripheren Komponenten als eine formschlüssige Verdrehsicherungsmaßnahme wirksam sein.

Eine Weiterbildung der Erfindung besteht darin, dass die Kolbeninnenwandung über mehrere Felder verfügt, und wobei die Felder zueinander im Wesentlichen diametral gegenüberliegend arrangiert sind. Dadurch ist deren Verstärkungseffekt, bei reduziertem Aufwand, besonders effizient über den Umfang der Kolbenwandung verteilt angeordnet.

Bei regelmäßiger Teilung für sämtliche Felder, welche sich beispielsweise über den gesamten Innenumfang der Kolbeninnenwandung hinweg erstrecken können, wird der beschriebene Verstärkungseffekt gewissermaßen gleichmäßig über die gesamte Wandung verteilt. Ein größerer Anteil von Feldern beinhaltet einen positiven, volumetrischen Bonuseffekt. Denn dadurch wird nebenbei ein freies Hydraulikvolumen im Kolbeninnenraum reduziert. Im Ergebnis wird ohne gesonderte Füllkörper das notwendige Bremsfluidvolumen reduziert.

Sämtliche Züge bzw. Felder können ganz grundsätzlich mit identischer Profilierung vorgesehen sein, was einen Werkzeugbau in Bezug auf Ziehstempel, Dorne oder vergleichbare Werkzeuge erleichtert. Zur Erschließung einer Mehrwertfunktion ist es möglich, automatisch konstruktiv, eine lagerichtige Montagezuordnung zwecks günstiger Montagepaarung des Kolbens mit peripheren Bauteilen dadurch vorzugeben, dass Züge bzw. Felder durch ein besonderes Muster zueinander unterschiedlich profiliert vorgesehen sind, so dass diese in ausschließlich ausgerichtet zueinander, bestimmter Lage montierbar sind. Das besondere Muster kann sich grundsätzlich auf eine gezielte Variation sämtlicher geometrischen Größen der Züge und Felder erstrecken (Tiefe, Länge, Teilung, Versatz, Relationen zueinander sowie zur Kolbeninnenwandung) . Dadurch, und durch eine entsprechend zielgerichtet angepasste Aufnahme der Züge und Felder in einem peripheren Bauteil wird gewissermaßen eine konstruktive, lagerichtige Codierung für einen lagerichtigen Zusammenbau ermöglicht. Hinzuzufügen ist, dass es sich bei der peripheren Komponente beispielsweise um eine Mutter eines Spindel-Mutter-Triebs einer Feststellbremse bzw. um eine Mutter einer Reibbelagverschleißnachstellvorrichtung handeln kann.

Die Felder können zur Erzielung eines Bonuseffekts als positiv formschlüssig nach radial innen weisend ausgeprägte Verdrehsicherungsmaßnahme an der Kolbeninnwandung so vorgesehen sein, dass diese formschlüssig in eine Kavität an einem passenden Gegenstück eingreifen. Umgekehrt gleiches gilt für die Züge. Demzufolge ist eine formschlüssige drehfeste Verbindung zwischen Kolben und peripherem Teil definiert, bei dem es sich beispielhaft um eine Mutter eines Spindeltriebs von einer Feststellbremsvorrichtung dienen kann.

Weiterhin vorteilhafte Merkmale, Wirkungen und Ausgestaltungen der Erfindung gehen aus nachfolgender Beschreibung anhand der Zeichnung wie folgt im Einzelnen hervor. In der Zeichnung zeigt:

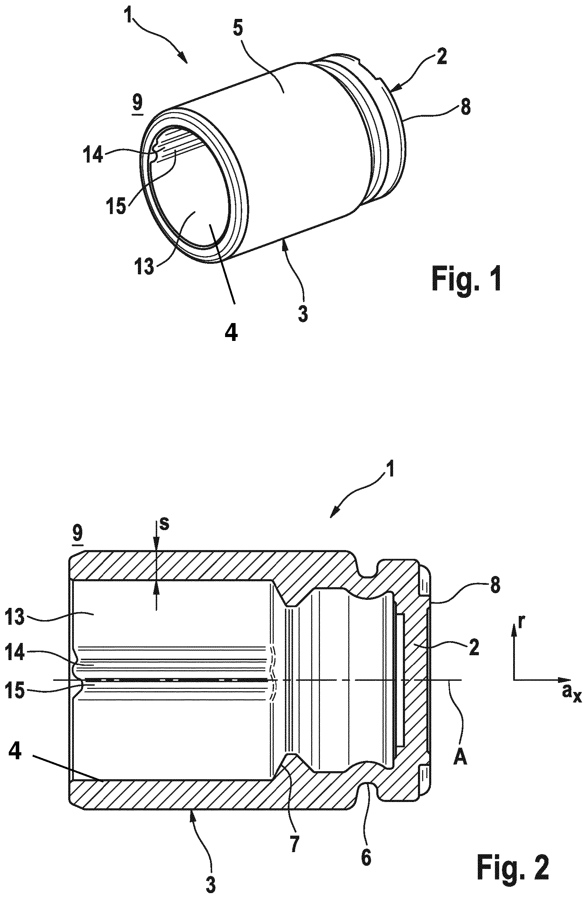

Fig. 1 kleinkalibriger Stahlbremskolben in perspektivischer Ansicht verkleinert,
Fig. 2 kleinkalibriger Stahlbremskolben im Schnitt vergrößert,

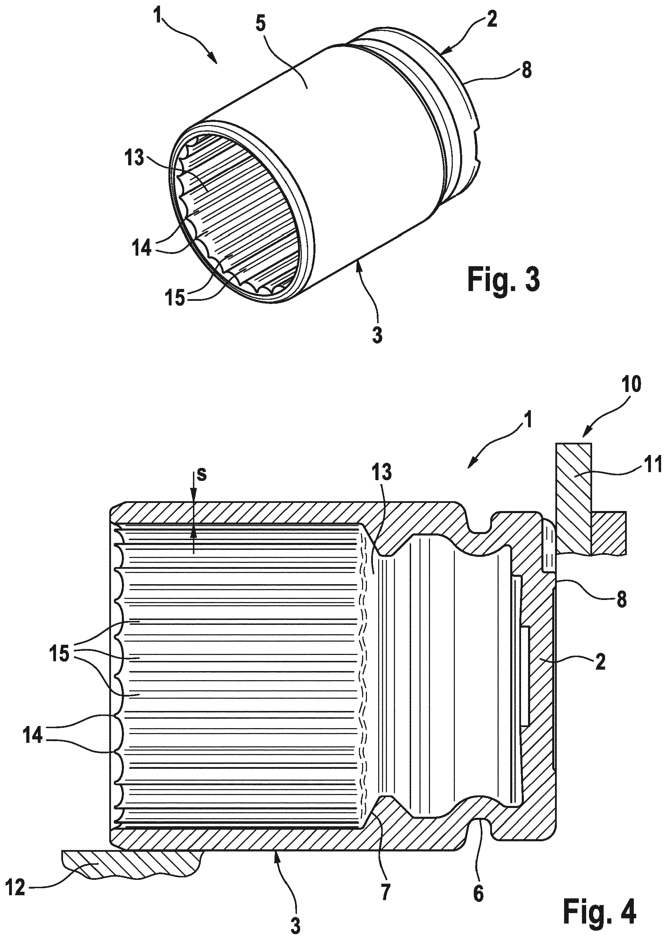

Fig. 3 großkalibriger Stahlbremskolben in perspektivischer Ansicht verkleinert,
Fig. 4 großkalibriger Stahlbremskolben im Schnitt vergrö-ßert,

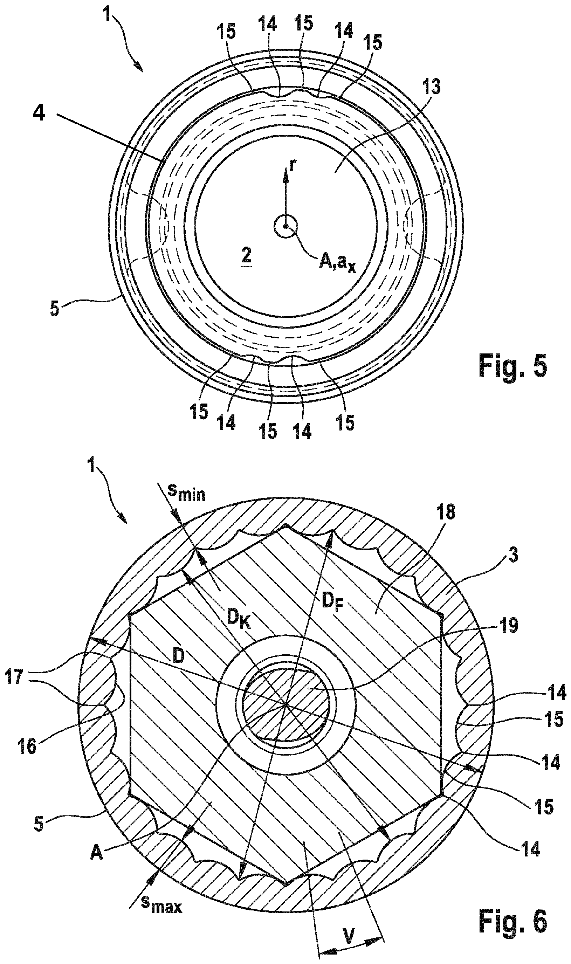

Fig. 5 kleinkalibriger Stahlbremskolben aus Fig. 2 in Draufsicht von links vergrößert,
Fig. 6 Kolbenmodul enthaltend einen großkalibrigen Strahlbremskolben wie in Fig. 4 in Draufsicht von links mit eingefügten Feststellbremskomponenten, vergrößert, und
Fig. 7-9 Prinzipskizzen zur Erläuterung des Stahlbremskolbenfertigungsprozesses.

Die Erfindung betrifft einen dünnwandig-kaltumgeformten, einstückigen Stahlbremskolben 1 für eine hydraulische Scheibenbremse, in Ausprägung als einseitig offener Topf umfassend Boden 2 und Wand 3 einschließlich Innen- und Außenwand 4, 5. Die Wandstärke s ist über Boden 2 und Wand 3 weitestgehend konstant. Kolbennenndurchmesser D sowie Wand sind so weit wie möglich rotationssymmetrisch zur Kolbenlängsachse A parallel. Die Außenwand 5 weist endseitig oder bodenseitig eine radial einwärts eingestülpte Nut 6 auf, die nach radial außen offen ist. Radial innen liegt, beispielhaft im Bereich der Nut 6 oder axial versetzt dazu, eine Wandkonsole 7 vor. Die Wandkonsole 7 kann ringförmig umlaufend vorgesehen sein, also anhand Querschnittsverstärkung einschließlich Kaltverfestigung zu einer lokalen Verstärkungswirkung zur Vermeidung von lokaler Spannungskonzentration beitragen. Der Strahlbremskolben 1 verfügt an seiner offenen Seite 9, oder an seinem Boden 2, über ein Auflager zur Interaktion mit einer Reibbelagrückenplatte 11 eines Teilbelagscheibenbremsbelags 10. Dies Auflager ist als weitestgehend ebene Stirnfläche 8 orthogonal-rechtswinklig zu einer Kolbenlängsachse A arrangiert. Das Kolbeninnere 13 kann Schnittstellen zur Anordnung beziehungsweise Interaktion mit peripheren Komponenten integrieren. Beispielsweise kann die Wandkonsole 7 als Schnittstelle für folgende Funktionen herangezogen werden: a) zur Spannkrafteinleitung, b) zur Fixierung zwischen Rückenplatte 11 und Stahlbremskolben 1, bzw. die Innenwand c) als Stützlager zur Befederung vom Reibbelag, d) Verdrehsicherung für eine Mutter 18 einer Feststellvorrichtung.

Erfindungsgemäß verfügt die Innenwand 4 seitlich, ggf. mit Abstand zu der Wandkonsole 7, am offenen Ende über mindestens einen Zug 14 und über mindestens ein Feld 15 welche derart profiliert ausgebildet sind, dass die Wand 3 über abwechselnd unterschiedlich dick ausgeprägte Wandflächenbezirke verfügt, die in Umfangsrichtung mit Versatz V zueinander beabstandet vorliegen. Züge 14 und Felder 15 können also anhand abwechselnder Querschnittsvariation, einschließlich Kaltverfestigung, auch gemeinsam in funktionaler Interaktion mit der Wandkonsole 7 zu einer lokalen Verstärkungswirkung, also Vermeidung von lokaler Spannungskonzentration beitragen, und demzufolge ungewünschte Deformation der Wand 3 vermeiden. Jeder Zug 14 liegt in diesem Zusammenhang als radial auswärts gerichtete, und parallel zur Kolbenachse A axial gestreckte Kavität, also Wandstärkenverringerung, vor. Demgegenüber ist jedes Feld 15 als radial einwärts orientierte, also lokal aufgedickte, Wandverstärkung mit parallel zur Kolbenachse A gerichteter axialer Erstreckung zu verstehen. Züge 14 und Felder 15 sind parallel zueinander gerichtet. Züge 14 und Felder 15 sind an der Innenwand 4 mit beabstandeten Durchmessern (Kopfkreis DK, Fußkreis DF), abwechselnd vorgesehen. Züge 14 und Felder 15 sind erfindungsgemäß unregelmäßig zueinander an der Innenwand 4 versetzt vorgesehen für eine besondere Zuordnungscodierung. Züge 14 beziehungsweise Felder 15 können untereinander identisch sowie besonders profiliert vorgesehen sein. Jedoch ist auch diesbezüglich eine formschlüssige Codierung ermöglicht, indem Züge 14 beziehungsweise Felder 15 jeweils untereinander unterschiedlich Profiliert vorgesehen sind, damit periphere Bauteile in eineindeutiger Montageposition korrekt zugewiesen werden können. Die Codierung kann dadurch gegeben sein, dass Züge 14 beziehungsweise Felder 15 nach einem bestimmten Muster am Umfang zueinander versetzt vorgesehen sind.

Eine Funktion der Züge 14 und Felder 15 darf darin bestehen, dass diese zur Ausbildung von einem formschlüssig ausgeprägten Verdrehsicherungsmittel so arrangiert sind, dass diese mit einem passend profilierten Gegenstück an einem peripheren Bauteil (Mutter 18 eines Spindel-Muttertriebs) kooperieren. Dabei kann die Profilierung der Innenwand 4 ein Keilnabensegment ausbilden beziehungsweise als in sich ringförmig geschlossenes Keilnabenprofils vorliegen. Mehrere Züge 14 sind paarweise zueinander diametral gegenüberliegend versetzt vorgesehen, und dementsprechend sind mehrere Felder 15 paarweise zueinander diametral gegenüberliegend versetzt vorzusehen. Im Übergang zwischen Zug und Feld kann das ausgebildete Profil eine Profilflanke umfassen, welche Stufenabsatzform aufweist. Abweichungen von der Stufenabsatzform sind möglich. Beispielsweise kann die Profilflanke zwischen Zug 14 und Feld 15 wellenförmig oder verzahnungsartig profiliert ausgebildet sein. Um Freigang beziehungsweise sinnvolle Tolerierung zu erlauben, verfügt die Profilflanke in wechselseitigen Übergang zwischen Zug 14 und Feld 15 kopfkreisseitig über je eine Abrundung 16 und fußkreisseitig über je eine Hohlkehle 17. Wenn Züge 14 und Felder 15 im Querschnitt symmetrisch ausgebildet sind, erleichtert dies den Werkzeugbau. Züge 14und Felder 15 dürfen asymmetrisch verteilt oder codiert ausgeprägt sein, um eine lagerichtige Montagezuordnung für periphere Bauteile zu ermöglichen. Es ist möglich, die Züge 14 und Felder 15 im Kolbeninneren 13 zusätzlich als formschlüssige sowie drehfeste Aufnahme für komplementäre Züge sowie Felder einer profilierten Mutter 18 eines Spindeltriebs einer Feststellbremsvorrichtung zu verwenden.

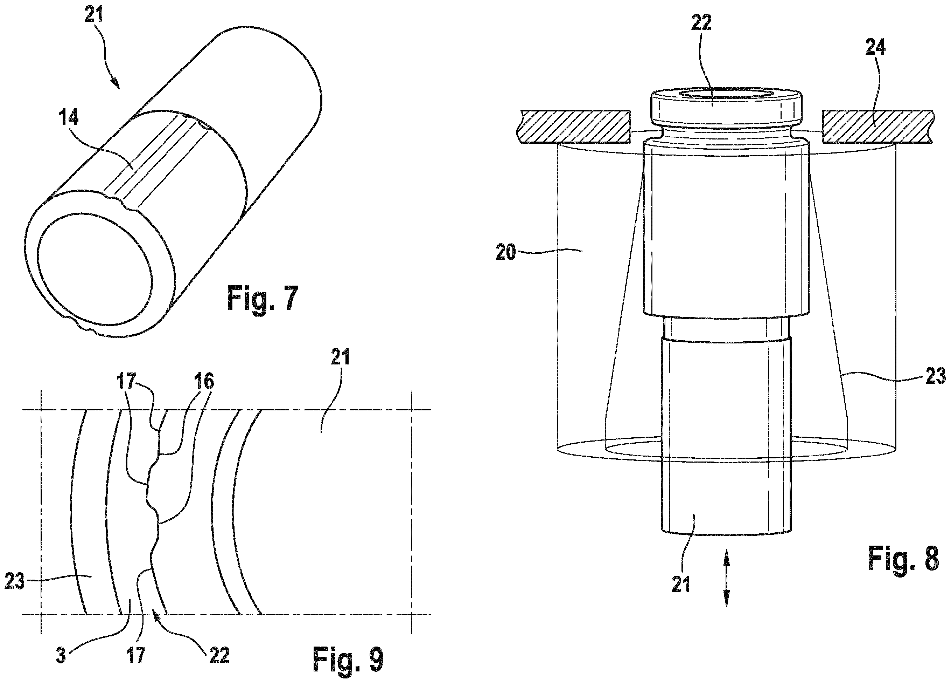

Die Herstellung der Profilierung erfolgt in Anlehnung an Fig. 7-9 mittels einer ruhend im Arbeitsraum auf einem Tisch 24 eingespannt angeordneten, gelochten, Matritze 20 in Verbindung mit einem außenprofilierten Formstempel 21 welcher zyklisch seine Arbeitshübe in Richtung Matritze 20 translatorisch gerichtet ausübt. Der außenprofilierte Formstempel 21 greift dabei in das Kolbeninnere 13 eines napfförmigen Kolbenrohlings 22 ein, und zieht den Kolbenrohling 22 durch ein Loch 23 in der Matritze 20 (bspw. Abstreckgleitziehen) . Alternativ dazu ist Massivumformung (Rückwärtsfließpressen mit Hilfe von einer napfförmigen Matritze und einem außenprofilierten Stößel möglich.

### Bezugszeichenliste

- 1: Stahlbremskolben
- 2: Boden
- 3: Wand
- 4: Innenwand
- 5: Aussenwand
- 6: Nut
- 7: Wandkonsole
- 8: Stirnfläche
- 9: offene Seite
- 10: Teilbelagscheibenbremsbelag
- 11: Reibbelagrückenplatte
- 12: Bremsgehäuse
- 13: Kolbeninneres
- 14: Zug
- 15: Feld
- 16: Abrundung
- 17: Hohlkehle
- 18: Mutter
- 19: Spindel
- 20: Matritze
- 21: Formstempel
- 22: Kolbenrohling
- 23: Loch
- 24: Tisch
- A: Kolbenlängsachse
- ax: Axialrichtung

- D: Kolben(nenn)durchmesser
- DK: Kopfkreisdurchmesser
- DF: Fusskreisdurchmesser
- r: Radialrichtung
- s: Wandstärke
- smin: minimale Wandstärke
- smax: maximale Wandstärke
- V: Versatz

## Patentansprüche

1. Kaltumgeformter Stahlbremskolben (1) für eine Kraftfahrzeugteilbelagscheibenbremse, mit Aufbau als einseitig offener Topf umfassend Boden (2) und Wand (3), mit einer radial außen eingeprägten Nut (6) in der Wand (3), sowie mit einer radial innen angeprägten Wandkonsole (7) an der Wand (3), wobei die Wand (3) mit Abstand neben der Wandkonsole (7) mit mindestens einem Zug (14) und mit mindestens einem Feld (15) derart profiliert ausgebildet ist, dass die Wand (3) über unterschiedlich dick ausgeprägte Wandflächenbezirke verfügt, die in Umfangsrichtung mit Versatz (V) zueinander beabstandet vorliegen, **dadurch gekennzeichnet, dass** Züge (14) und/oder Felder (15) mit unregelmäßigem Versatz (V) zueinander an einer Innenwand (4) der Wand (3) beabstandet vorgesehen sind.

2. Kaltumgeformter Stahlbremskolben (1) nach Anspruch 1, wobei mehrere Züge (14) und mehrere Felder (15) jeweils parallel zueinander axial gerichtet vorgesehen sind.

3. Kaltumgeformter Stahlbremskolben (1) nach Anspruch 1, wobei die Züge (14) und die Felder (15) jeweils parallel zur Kolbenachse (A) gerichtet vorgesehen sind.

4. Kaltumgeformter Stahlbremskolben (1) nach Anspruch 1, wobei die Züge (14) und die Felder (15), am Umfang der Innenwand (4) abwechselnd, mit beabstandeten Durchmessern (DK, DF) vorgesehen sind.

5. Kaltumgeformter Stahlbremskolben (1) nach Anspruch 1, wobei Züge (14) und Felder (15) profiliert vorgesehen sind.

6. Kaltumgeformter Stahlbremskolben (1) nach Anspruch 1, wobei die Züge (14) beziehungsweise die Felder (15) jeweils untereinander über identische Profilierung verfügen.

7. Kaltumgeformter Stahlbremskolben (1) nach Anspruch 1, wobei die Züge (14) beziehungsweise die Felder (15) jeweils untereinander über unterschiedliche Profilierung verfügen.

8. Kaltumgeformter Stahlbremskolben (1) nach Anspruch 1, wobei Züge (14) beziehungsweise Felder (15) nach einem bestimmten Muster am Umfang zueinander versetzt vorgesehen sind.

9. Kaltumgeformter Stahlbremskolben (1) nach Anspruch 1, wobei die Züge (14) und die Felder (15) zur Ausbildung von einem formschlüssig ausgeprägten Verdrehsicherungsmittel so vorgesehen sind, dass diese mit einem passend profilierten Gegenstück an einem peripheren Bauteil kooperieren.

10. Kaltumgeformter Stahlbremskolben (1) nach Anspruch 1, wobei Züge (14) und Felder (15) als Keilnabenprofil abwechselnd vorgesehen sind.

11. Kaltumgeformter Stahlbremskolben (1) nach Anspruch 1, wobei mehrere Züge (14) paarweise zueinander diametral gegenüberliegend versetzt vorgesehen sind, und wobei mehrere Felder (15) paarweise zueinander diametral gegenüberliegend versetzt vorgesehen sind.

12. Kaltumgeformter Stahlbremskolben (1) nach Anspruch 1, wobei eine Profilflanke zwischen Zug (14) und Feld (15) Stufenabsatzform aufweist.

13. Kaltumgeformter Stahlbremskolben (1) nach Anspruch 1, wobei eine Profilflanke zwischen Zug (14) und Feld (15) wellenförmig oder verzahnungsartig profiliert ausgebildet ist.

14. Kaltumgeformter Stahlbremskolben (1) nach Anspruch 1, wobei eine Profilflanke in wechselseitigen Übergang zwischen Zug (14) und Feld (15) kopfkreisseitig über je eine Abrundung (16) und fußkreisseitig über je eine Hohlkehle (17) verfügt.

15. Kaltumgeformter Stahlbremskolben (1) nach Anspruch 1, wobei Zug (14) und Feld (15) im Querschnitt symmetrisch oder asymmetrisch ausgebildet sind.

16. Kaltumgeformter Stahlbremskolben (1) nach Anspruch 1, wobei Züge (14) und Felder (15) asymmetrisch verteilt oder codiert ausgeprägt sind, um eine lagerichtige Montagezuordnung für ein peripheres Bauteil zu ermöglichen.

17. Kaltumgeformter Stahlbremskolben (1) nach Anspruch 1, wobei die Züge (14) und die Felder (15) im Kolbeninneren (13) als formschlüssige sowie drehfeste Aufnahme für komplementäre Züge sowie Felder einer profilierten Mutter (18) eines Spindeltriebs einer Feststellbremsvorrichtung vorgesehen sind.

## Claims

1. A cold formed steel brake piston (1) for a vehicle partial lining disk brake, with a structure in the form of a cup open on one side, comprising a base (2) and a wall (3), with a groove (6) embossed radially on the outside in the wall (3), and with a wall bracket (7) embossed radially on the inside on the wall (3), the wall (3) being profiled at a distance next to the wall bracket (7) with at least one groove (14) and with at least one land (15) in such a way that the wall (3) comprises wall surface areas which have different thicknesses and are spaced apart from one another with an offset (V) in the circumferential direction, **characterized in that** the grooves (14) and/or lands (15) are provided so as to be spaced apart from one another with an irregular offset (V) on an inner wall (4) of the wall (3).

2. The cold formed steel brake piston (1) according to claim 1, wherein a plurality of grooves (14) and a plurality of lands (15) are each provided so as to be axially aligned parallel to one another.

3. The cold formed steel brake piston (1) according to claim 1, wherein the grooves (14) and the lands (15) are each provided so as to be parallel to the piston axis (A).

4. The cold formed steel brake piston (1) according to claim 1, wherein the grooves (14) and the lands (15) are provided alternately on the circumference of the inner wall (4) with spaced diameters (DK, DF).

5. The cold formed steel brake piston (1) according to claim 1, wherein the grooves (14) and lands (15) are provided so as to be profiled.

6. The cold formed steel brake piston (1) according to claim 1, wherein the grooves (14) and the lands (15) have the same profile.

7. The cold formed steel brake piston (1) according to claim 1, wherein the grooves (14) and the lands (15) have different profiles.

8. The cold formed steel brake piston (1) according to claim 1, wherein the grooves (14) and the lands (15) are provided so as to be offset relative to one another on the circumference according to a certain pattern.

9. The cold formed steel brake piston (1) according to claim 1, wherein the grooves (14) and the lands (15) are provided to form a positively shaped anti-rotation means such that they cooperate with a suitably profiled counterpart on a peripheral component.

10. The cold formed steel brake piston (1) according to claim 1, wherein the grooves (14) and the lands (15) are provided alternately as a splined hub profile.

11. The cold formed steel brake piston (1) according to claim 1, wherein several grooves (14) are provided in pairs diametrically opposed to each other in an offset manner, and wherein several lands (15) are provided in pairs diametrically opposed to each other in an offset manner.

12. The cold formed steel brake piston (1) according to claim 1, wherein a profile flank between a groove (14) and a land (15) has a stepped shoulder shape.

13. The cold formed steel brake piston (1) according to claim 1, wherein a profile flank between a groove (14) and a land (15) has a design in the shape of a wavy or toothed profile.

14. The cold formed steel brake piston (1) according to claim 1, wherein a profile flank in the mutual transition between a groove (14) and a land (15) has a rounding (16) on the tip circle side and a fillet (17) on the base circle side.

15. The cold formed steel brake piston (1) according to claim 1, wherein the grooves (14) and the lands (15) are formed so as to be symmetrical or asymmetrical in cross-section.

16. The cold formed steel brake piston (1) according to claim 1, wherein the grooves (14) and the lands (15) are asymmetrically distributed or are embossed so as to have a coding in order to enable a mounting assignment for a peripheral component in the correct position.

17. The cold formed steel brake piston (1) according to claim 1, wherein the grooves (14) and the lands (15) are provided in the piston interior (13) as a form-fitting and rotation-preventing receptacle for complementary grooves and lands of a profiled nut (18) of a spindle drive of a parking brake device.

## Revendications

1. Piston de frein en acier formé à froid (1) pour un frein à disque à garniture de véhicule automobile, configuré comme pot ouvert d'un côté comprenant un fond (2) et une paroi (3), avec une rainure (6) pratiquée de manière radialement extérieure dans la paroi (3), ainsi qu'avec une console de paroi (7) appliquée de manière radialement intérieure au niveau de la paroi (3), sachant que la paroi (3) est constituée, en espacement à côté de la console de paroi (7), de manière profilée avec au moins une crête (14) et avec au moins un creux (15) de telle manière que la paroi (3) dispose de régions surfaciques de paroi d'épaisseurs différentes qui sont situées de manière espacée les unes par rapport aux autres avec un décalage (V) dans le sens du pourtour, **caractérisé en ce que** les crêtes (14) et/ou les creux (15) sont prévus de manière espacée au niveau d'une paroi intérieure (4) de la paroi (3) avec un décalage (V) irrégulier les uns par rapport aux autres.

2. Piston de frein en acier formé à froid (1) selon la revendication 1, sachant que plusieurs crêtes (14) et plusieurs creux (15) sont prévus de manière axialement orientée parallèlement les uns par rapport aux autres.

3. Piston de frein en acier formé à froid (1) selon la revendication 1, sachant que les crêtes (14) et les creux (15) sont prévus de manière orientée respectivement parallèlement à l'axe de piston (A).

4. Piston de frein en acier formé à froid (1) selon la revendication 1, sachant que les crêtes (14) et les creux (15), en alternance sur le pourtour de la paroi intérieure (4), sont prévus avec des diamètres (DK, DF) espacés.

5. Piston de frein en acier formé à froid (1) selon la revendication 1, sachant que les crêtes (14) et les creux (15) sont prévus de manière profilée.

6. Piston de frein en acier formé à froid (1) selon la revendication 1, sachant que les crêtes (14), et respectivement les creux (15), disposent d'un profilage identique entre eux.

7. Piston de frein en acier formé à froid (1) selon la revendication 1, sachant que les crêtes (14), et respectivement les creux (15), disposent d'un profilage différent entre eux.

8. Piston de frein en acier formé à froid (1) selon la revendication 1, sachant que les crêtes (14), et respectivement les creux (15), sont prévus de manière décalée les uns par rapport aux autres sur le pourtour selon un motif déterminé.

9. Piston de frein en acier formé à froid (1) selon la revendication 1, sachant que les crêtes (14) et les creux (15), pour constituer un moyen anti-rotation formé par complémentarité de forme, sont prévus de telle sorte que ceux-ci interagissent avec une contrepartie profilée de manière adaptée au niveau d'un composant périphérique.

10. Piston de frein en acier formé à froid (1) selon la revendication 1, sachant que les crêtes (14) et les creux (15) sont prévus de manière alternante comme profilé de moyeu cannelé.

11. Piston de frein en acier formé à froid (1) selon la revendication 1, sachant que plusieurs crêtes (14) sont prévues de manière décalée les unes par rapport aux autres par paires de façon diamétralement opposée, et sachant que plusieurs creux (15) sont prévus de manière décalée les uns par rapport aux autres par paires de façon diamétralement opposée.

12. Piston de frein en acier formé à froid (1) selon la revendication 1, sachant qu'un flanc de profilé entre crête (14) et creux (15) présente une forme de palier.

13. Piston de frein en acier formé à froid (1) selon la revendication 1, sachant qu'un flanc de profilé entre crête (14) et creux (15) est constitué de manière profilée en forme ondulée ou à denture.

14. Piston de frein en acier formé à froid (1) selon la revendication 1, sachant qu'un flanc de profilé en transition mutuel entre crête (14) et creux (15) dispose respectivement d'un arrondi (16) côté cercle de tête et respectivement d'une gorge (17) côté cercle de pied.

15. Piston de frein en acier formé à froid (1) selon la revendication 1, sachant que les crête (14) et les creux (15) sont constitués de manière symétrique ou asymétrique en section transversale.

16. Piston de frein en acier formé à froid (1) selon la revendication 1, sachant que les crêtes (14) et les creux (15) sont formés de manière distribuée asymétriquement ou codée pour permettre une affectation au montage en position correcte pour un composant périphérique.

17. Piston de frein en acier formé à froid (1) selon la revendication 1, sachant que les crêtes (14) et les creux (15) sont prévus à l'intérieur du piston (13) comme logement à complémentarité de forme ainsi que fixe en rotation pour des crêtes et creux complémentaires d'un écrou (18) profilé d'un mécanisme à vis d'un dispositif de frein de stationnement.
